# EUROPEAN PATENT APPLICATION

(11) **EP 2 939 831 A1**
(43) Date of publication of application: **04.11.2015**
(21) Application number: 13868280.2
(22) Date of filing: 20.12.2013
(51) Int. Cl.: B32B 27/32, B32B 27/00, B32B 27/20

(54) **POLYOLEFIN-BASED FILM FOR DECORATIVE SHEET**

(30) Priority: 25.12.2012 JP 2012281748
(71) Applicant: Mitsubishi Plastics, Inc., Tokyo 100-8252 (JP)
(72) Inventor: KURATA Masashi, Nagoya-shi Aichi 453-0862 (JP)
(74) Representative: Ter Meer Steinmeister & Partner
(86) International application number: PCT/JP2013/084259
(87) International publication number: WO 2014/103935

(57) **Abstract**

The present invention addresses the problem of providing a polyolefin-based film for decorative sheets which, even when thin, causes no trouble during film conveyance and which enables the decorative sheets to retain high quality, e.g., high hiding properties, and has such satisfactory film-forming properties that generation of gum, etc. during film formation does not take place. The polyolefin-based film for decorative sheets has a thickness less than 60 µm and comprises a front layer, an interlayer, and a back layer, wherein the interlayer has a higher pigment content than the front layer and the back layer or only the interlayer contains a pigment. The color difference between the film placed on the white portion of the hiding power chart as provided for in JIS K 5600 and the film placed on the black portion thereof is 4.0 or less. The film, after a heat treatment at 110°C for 60 minutes, has a 10% modulus of 10.0 N/cm or more.

## Description

### TECHNICAL FIELD

The present invention relates to a polyolefin film for decorative sheet. The present invention specifically relates to a polyolefin film for decorative sheet, having a thickness less than 60 µm and being excellent in film transportability, concealing properties, and film forming performance.

### BACKGROUND ART

Decorative materials such as decorative plywood are used in furniture, architectural interior materials, or the like. Well-known materials are those in which decorative sheet applied with printing and coloring is affixed to plywood or other wood or steel sheets or other backing materials, and paper and plastic films are widely used as materials of these decorative sheets.

Vinyl chloride resins are excellent in design characteristics and adhesiveness, and there are many examples in which these resins are used as plastic film materials for decorative sheets. However, decorative sheets based on polyolefin films have come to be used lately due to problems including treatment of hydrogen chloride gas produced during disposal by incineration after use, or the like, or selection of furnace materials for the incinerator used therein. Decorative sheets based on polypropylene resin films, in particular, have a favorable balance of rigidity and flexibility, and polypropylene materials therefore have come to be much used as films for decorative sheets.

### PRIOR ART REFERENCES

### PATENT REFERENCES

Patent Document 1: Japanese Patent No. 3702628

### SUMMARY OF THE INVENTION

### PROBLEMS TO BE SOLVED BY THE INVENTION

Such decorative sheets made of plastic film have advantages over paper, including being amenable to embossing and having excellent design characteristics, but there is a problem that the cost is higher than that of paper.

The thickness of the film could be reduced in order to lower the cost of decorative sheets made of film, but reducing the thickness easily leads to poor film transport during printing. Pigments also must be added in order to ensure a concealing property as a film for decorative sheet, but the quantity of pigment relative to the film increases in relative fashion when the film is reduced in thickness, and accordingly a problem is presented that gummy residue is produced during film formation and film forming performance is impeded.

An object of the present invention is to provide a thin polyolefin film for decorative sheet that exhibits no adverse effects during film transport, retains high quality as a decorative sheet including excellent concealing properties, and has favorable film forming performance without the production of gummy residue, or the like, during film formation.

### MEANS FOR SOLVING THE PROBLEMS

As a result of thoroughgoing investigations, the present inventors discovered that the aforesaid object can be achieved by a film having a specific lamination configuration and having a sufficient hardness (high 10% modulus) while having a thickness less than 60 µm, and achieved the present invention as a result.

Specifically, the present invention provides:
(1) A polyolefin film for decorative sheet, having a thickness less than 60 µm; comprising at least a front layer, an intermediate layer, and a back layer; wherein a pigment content in the intermediate layer is greater than a pigment content in the front layer and back layer, or a pigment is contained only in the intermediate layer; a color difference between when the film is placed on a white portion and when the film is placed on a black portion of JIS K 5600 concealing power test paper is 4.0 or lower; said film has a 10% modulus of 10.0 N/cm or higher after thermal treatment at 110°C for 60 minutes;
(2) The polyolefin film for decorative sheet according to (1), wherein a yield value after thermal treatment at 110°C for 60 minutes is 10.0 N/cm or higher;
(3) The polyolefin film for decorative sheet according to (1) or (2), wherein a heat shrinkage factor at 120°C is 2.5% or lower in the MD and TD;
(4) The polyolefin film for decorative sheet according to any one of (1) to (3), wherein a ratio of thickness of the intermediate layer to the thickness of the entire film is 70% to 99.9%;
(5) The polyolefin film for decorative sheet according to any one of (1) to (4), having a thickness 50 µm or lower; and
(6) A decorative sheet made using the polyolefin film for decorative sheet according to any one of (1) to (5).

### ADVANTAGES OF THE INVENTION

The present invention can provide a polyolefin film for decorative sheet that exhibits no adverse effects during film transport, retains high quality as a decorative sheet including excellent concealing properties, has favorable film forming performance without production of gummy residue, or the like, during film formation, and is thin (less than 60 µm).

### BEST MODE FOR CARRYING OUT THE INVENTION

One aspect of the present invention is a polyolefin film for decorative sheet, the film having a thickness less than 60 µm, comprising at least a front layer, an intermediate layer, and a back layer, having a greater pigment content in the intermediate layer than a pigment content in the front layer and back layer or containing a pigment only in the intermediate layer, having a color difference of 4.0 or lower between when the film is placed on a white portion and when the film is placed on a black portion of JIS K 5600 prescribed concealing power test paper, and having a 10% modulus of 10.0 N/cm or higher after thermal treatment at 110°C for 60 minutes.

The polyolefin film for decorative sheet of the present invention is configured with three or more layers comprising at least a front layer, an intermediate layer, and a back layer. Here, the front layer is the layer on the side applied with printing when forming the film of the decorative sheet, and the back layer is the layer on the opposite side. A layer containing a polyolefin resin may be further provided between the front layer and the intermediate layer and between the back layer and the intermediate layer. An adhesive layer also may be provided between the front layer and the intermediate layer and between the back layer and the intermediate layer.

The ratio of the thickness of the intermediate layer over the thickness of the entire polyolefin film for decorative sheet of the present invention is preferably 70% to 99.9%, more preferably 75% to 95%.

The polyolefin film for decorative sheet of the present invention preferably contains at least one polypropylene resin or polyethylene resin, and preferably contains polypropylene resin.

The front layer, intermediate layer, and back layer of the polyolefin film for decorative sheet of the present invention preferably contain polypropylene resin.

Examples of polypropylene resins include propylene homopolymers, copolymers, or mixtures (polymer blends) of the aforementioned homopolymers and/or copolymers with other polymers. Examples of the copolymers include random copolymers or block copolymers of propylene with ethylene or other α-olefins, or graft copolymers of propylene with the polyolefinic copolymer as a backbone chain polymer. α-olefins copolymerizable with propylene preferably are those having 4 to 12 carbon atoms; examples include 1-butene, 1-pentene, 1-hexene, 1-heptene, 1-octene, 4-methyl-1-pentene, and 1-decene, and one kind or mixtures of two or more kinds thereof can be used. The mixture ratio of the α-olefin is preferably 1 to 10 wt%, particularly 2 to 6 wt%, over the propylene.

Examples of polyolefinic copolymers for the backbone polymer of the abovementioned propylene graft copolymer include ethylene-propylene rubber, ethylene butane rubber, and ethylene-propylene-diene rubber.

Examples of polymers that can be mixed with propylene homopolymers and/or copolymers to provide polymer blends include isoprene rubber, butadiene rubber, butyl rubber, propylene-butadiene rubber, acrylonitrile-butadiene rubber, acrylonitrile-isoprene rubber, and other diene-based rubbers; ethylene-propylene copolymer rubber, ethylene-propylene non-conjugate diene rubber, ethylene-butadiene copolymer rubber, and other polyolefinic thermoplastic elastomers; and styrene-butadiene-based, styrene-isoprene-based, and other styrene-based thermoplastic elastomers. Styrene-butadiene-based thermoplastic elastomers in particular are preferred. Styrene-based thermoplastic elastomers are preferably hydrogenated. The quantity of polymer mixed is preferably 5 to 80 wt%, particularly 20 to 60 wt%.

Propylene homopolymers or mixtures of propylene homopolymers and random copolymers in particular are preferably used in the polyolefin film for decorative sheet of the present invention. The mixture ratio in the mixture of propylene homopolymer and random copolymer is preferably 100:0 to 30:70, more preferably 100:0 to 50:50.

Bringing the mixture ratio of propylene homopolymer and random copolymer to the abovementioned range allows sufficient strength to be obtained and the incidence of poor film transport to be minimized even when the film is thin.

The abovementioned mixture ratio may be used in at least the intermediate layer; for example, in the other layers the mixture ratio may be changed as appropriate in accordance with the required performance.

The melt flow rate of the polypropylene resin used in the polyolefin film for decorative sheet of the present invention is preferably 0.1 to 30 (g/10 minutes). If the melt flow rate is 0.1 or higher, the material is easy to mold and a smooth film is easily obtained. If the melt flow rate is 30 or lower, the melt viscosity will not be excessively low and molding into a film remains uncomplicated.

The front layer, intermediate layer, and back layer of the polyolefin film for decorative sheet of the present invention can contain polyethylene resin and other polyolefin resins.

Examples of polyethylene resins include ethylene homopolymers, copolymers mainly comprising ethylene with other monomers copolymerizable with ethylene (low-density polyethylene (LDPE), linear low-density polyethylene (LLDPE), high-density polyethylene (HDPE), polyethylenes obtained by polymerizing using metallocene-based catalysts, and the like), and mixtures (polymer blends) of the aforementioned homopolymers and/or copolymers with other polymers. The melt flow rate of the polyethylene resin is preferably 0.1 to 30 (g/10 minutes) under conditions of 190°C and 2.16 kgf. If the melt flow rate is 0.1 or higher, the material is easy to mold and a smooth film is easily obtained. If the melt flow rate is 30 or lower, the melt viscosity does not become too low and molding into a film does not become difficult.

The compositions of the polyolefin resins in the front layer, intermediate layer, and back layer of the polyolefin film for decorative sheet of the present invention may be identical or different.

The polyolefin film for decorative sheet of the present invention contains a pigment, and the pigment content in the intermediate layer is greater than the pigment content in the front layer and back layer, or pigment is contained only in the intermediate layer. A lamination configuration is thus adopted in which more pigment is contained in the intermediate layer of the film and the quantity of pigment added to the front layer and back layer is reduced to the extent possible or not added, whereby the occurrence of gummy residue during film formation is preferentially prevented even when the quantity of pigment is great. Accordingly, a high-concealing, favorably formable film can be obtained even when the thickness of the film is made thin.

Both organic pigments and inorganic pigments can be used as pigments, examples including titanium oxide, carbon black, iron oxide, azo-based compounds, phthalocyanine-based compounds, and titanium oxide/antimony oxide/nickel oxide solid solutions. The pigment content depends also on the requisite concealing properties as a decorative sheet, but the pigment is preferably contained in a range of 1 to 60 parts by weight, more preferably in a range of 5 to 60 parts by weight, and even more preferably in a range of 10 to 60 parts by weight, over 100 parts by weight of the polypropylene resin. Having the pigment content fall within the abovementioned range improves the concealing properties even when the film is reduced in thickness.

Ultraviolet absorbers and/or hindered amine-based light stabilizers are preferably blended into the polyolefin film for decorative sheet of the present invention.

The quantity of ultraviolet absorber blended is preferably 0.01 to 10 parts by weight, particularly preferably 0.05 to 5 parts by weight, per 100 parts by weight of polyolefin resin in the respective layers. If the quantity blended is 0.01 parts by weight or higher, an effect of preventing browning degradation is easily obtained. If the quantity blended is 10 parts by weight or lower, an effect matching the quantity blended is obtained and there is no possibility of causing bleeding.

Examples of ultraviolet absorbers used in the polyolefin film for decorative sheet of the present invention include 2-[2'-hydroxy-3'-(3",4",5",6"-tetrahydrophthalimidemethyl)-5'-methylphenyl]benzotriazole (molecular weight 388), 2-[2-hydroxy-3,5-bis(α,α-dimethylbenzyl)phenyl]-2H-benzotriazole (molecular weight 448), 2,2-methylenebis[4-(1,1,3,3-tetramethylbutyl-6-(2H-benzotriazolyl-2-yl)phenyl] (molecular weight 659), and other benzotriazole-based ultraviolet absorbers; and 2,4-dihydroxybenzophenone, 2-hydroxy-4-methoxybenzophenone, 2-hydroxy-4-octoxybenzophenone, 2,2'-dihydroxy-4-dimethoxybenzophenone, bis(2-methoxy-4-hydroxy-5-benzoylphenyl)methane, and other benzophenone-based ultraviolet absorbers.

The use of benzotriazole-based ultraviolet absorbers in particular among the abovementioned ultraviolet absorbers is ideal in that coloring of the product is reduced, and the use of those having a molecular weight in the range of 380 to 1000, preferably in a range of 400 to 800, is more ideal. Setting the molecular weight to the abovementioned range further increases an effect of preventing blooming.

The quantity of hindered amine-based light stabilizer blended is preferably 0.01 to 10 parts by weight per 100 parts by weight of polyolefin resin in the respective layers. If the quantity blended is 0.01 parts by weight or higher, a stabilizing effect is easily obtained. If the quantity blended is 10 parts by weight or lower, an effect matching the quantity blended is obtained and there is no possibility of causing blooming.

Examples of hindered amine-based light stabilizers include bis(2,2,6,6-tetramethyl-4-piperidyl)sebacate, bis(1,2,2,6,6-pentamethyl-4-piperidyl) 2-(3,5-di-t-butyl-4-hydroxybenzyl)-2-n-butylmalonate, dimethyl succinate-1-(2-hydroxyethyl)-4-hydroxy-2,2,6,6-tetramethylpiperidine polycondensate, poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino)], and other hindered amine-based light stabilizers.

Other synthetic resins, or antioxidants, slip agents, colorants, fillers, nucleating agents, and other additives as needed may be added to the polyolefin film for decorative sheet of the present invention within a scope that does not impede the object of the present invention. These additives are commonly used in a form (master batch) blended in advance with a resin in high concentration.

The method for producing the polyolefin film for decorative sheet is not particularly limited; T-die extrusion molding, inflation molding, calendering, or other common method for molding polyolefin resin films may be used.

The thickness of the polyolefin film for decorative sheet of the present invention is preferably less than 60 µm, more preferably 50 µm or lower. Reducing the thickness of the film to this level is advantageous also in terms of cost over paper.

The lower limit of thickness is not particularly limited, but the thickness is preferably 20 µm or higher considering production characteristics.

The thickness of the polyolefin film for decorative sheet is the mean value upon having measured the film thicknesses using a dial gauge having 0.001 mm graduations following JIS B 7503, and is the arithmetic mean upon having performed measurement with sample counts in commonly considered locations when measuring the film thickness.

The 10% modulus of the polyolefin film for decorative sheet of the present invention after thermal treatment of the film at 110°C for 60 minutes is 10.0 N/cm or higher, preferably 10.5 N/cm or higher. Arranging to a high 10% modulus in this manner provides the polyolefin film for decorative sheet of the present invention with sufficient hardness even with a low thickness of less than 60 µm, and therefore makes it possible to minimize the incidence of poor film transport.

The yield value of the polyolefin film for decorative sheet of the present invention after thermal treatment of the film at 110°C for 60 minutes is preferably 10.0 N/cm or higher, preferably 10.5 N/cm or higher. If the yield value is 10.0 N/cm or higher, there is sufficient hardness even with a low thickness of less than 60 µm, and poor film transport can be minimized.

The polyolefin film for decorative sheet of the present invention has a color difference of 4.0 or lower, preferably 3.5 or lower, between when the film is placed on a white portion and when the film is placed on a black portion of JIS K 5600 prescribed concealing power test paper. Arranging so that the color difference is 4.0 or lower provides excellent concealing properties even with a low thickness of less than 60 µm, and makes it possible to maintain high quality as a decorative sheet.

The heat shrinkage factor of the polyolefin film for decorative sheet of the present invention at 120°C is preferably 2.5% or lower, preferably 2.0% or lower for both MD and TD. If the heat shrinkage factor is 2.5% or lower, a decorative sheet excellent in design characteristics can be obtained without causing pattern shifting by contraction during the printing process.

Another aspect of the present invention is a decorative sheet made using the abovementioned polyolefin film for decorative sheet.

An example of such decorative sheet is one in which a printing layer is formed on the side of the front layer of the abovementioned polyolefin film for decorative sheet and a transparent front surface layer is laminated thereon. Specifically, a decorative sheet of the present invention can be produced by applying corona treatment to one side or both sides of the polyolefin film for decorative sheet of the present invention, coating with a primer mainly comprising a chlorinated polyolefin resin, or the like, printing a wood grain pattern by gravure printing on the treated sheet, and further affixing a transparent sheet and embossing.

A front surface layer is commonly provided on the front surface of the decorative sheet in order to improve weather resistance, wear resistance, scratch resistance, and the like, of the decorative material, and this layer can be formed by laminating or coating with a polyolefin resin, polyester resin, acrylic resin, urethane resin, or the like. The front surface layer may be applied with embossing treatment.

The printing layer can be formed by gravure printing, offset printing, offset gravure printing, silk screen printing, or the like, using ink containing dispersed pigment, or the like, and can be formed also by transfer process. In order to improve the closeness of adhesion between the printing layer and the base material sheet for the decorative material, the surface of the base material sheet for the decorative material to be applied with printing is desirably subjected to corona treatment. It is also preferable to provide a primer layer between the aforementioned base material sheet and printing layer because the adhesiveness between the two is further improved. Examples of the primer layer include solutions mainly comprising chlorinated polyolefin resin, polyester resin, ethylene-vinyl alcohol copolymer, or the like, and having fillers added as needed.

### Examples

The present invention is described in detail with examples below, but the present invention is not limited to the examples below provided that no departure is made from the main point.

### (Examples 1 to 4, Comparative Example 1, Reference Example)

### (Preparation of polyolefin film for decorative sheet)

Films for decorative sheets measuring 50 to 60 µm in thickness were fabricated according to the formulations listed in Table 1 using a T-die extruder (T-die width: 650 mm) having one 50 mmϕ extruder and two 35 mmϕ extruders (die temperature: 230°C).

The obtained films were evaluated as noted below. The results are listed in Table 1.

### Evaluation method

### 1) Tension test (10% modulus, yield value)

The film was subjected to thermal treatment for 60 minutes in a Geer oven set to 110°C, then set aside for 24 hours at 23°C until the film stabilized, and then a portion for JIS K 7127 prescribed measurement was punched out into a 1 cm-wide dumbbell form. The sample was measured at a tension rate of 50 mm/min at 23°C, setting the distance between chucks to 4 cm.

Evaluation of film transportability due to film hardness was performed according to the following criteria.
○: 10% modulus is 10.0 N/cm or higher
X: 10% modulus is less than 10.0 N/cm

### 2) Concealing properties

The color difference (ΔE) was obtained by performing measurement using a KONICA MINOLTA SPECTROPHOTOMETER CM-2500d with D-65 light source and 10° angle of incidence, between when the film was placed on a white portion and when the film was placed on a black portion of JIS K 5600 prescribed concealing power test paper.

Evaluation of concealing properties due to color difference (ΔE) was performed according to the following criteria.
○: Color difference (ΔE) is 4.0 or lower
X: Color difference (ΔE) is greater than 4.0

### 3) Heat shrinkage test

The heat shrinkage factor was obtained, as prescribed in JIS K 7133, by subjecting a 10×10 cm sample to thermal treatment for 15 minutes in a Geer oven set to 120°C, then setting the sample aside for 30 minutes at 23°C, measuring the size of the film after stabilization, and calculating the change of dimensions between before and after thermal treatment.

Evaluation of printing characteristics due to heat shrinkage factor was performed according to the following criteria.
○: Heat shrinkage factor at 120°C is 2.5% or lower for both MD and TD
X: Heat shrinkage factor at 120°C is greater than 2.5% for either MD or TD

### 4) Stability of film formation

Evaluation of film forming performance during production was performed according to the following criteria.
○: Stable film formation is possible with substantially no occurrence of gummy residue
X: Gummy residue occurs and stable film formation is not possible

### Evaluation results

The results of evaluation of the examples, comparative example, and reference example are listed in Table 1.

In the table, "homo PP" is MA3U (Japan Polypropylene Corporation), "random PP" is FX3B (Japan Polypropylene Corporation), and "pigment MB" is 65 wt% titanium oxide, 30 wt% random PP, and 5 wt% dispersing agent.

The quantities of added pigment MB shown in the table are expressed in terms of parts by weight when the total quantity of resin contained in the intermediate layer is 100 parts by weight.

**Table 1**

| | | | Example 1 | Example 2 | Example 3 | Example 4 | Comparative Example 1 | Reference Example |
|---|---|---|---|---|---|---|---|---|
| Film thickness (µm) | | | 50 | 50 | 50 | 55 | 50 | 60 |
| Thickness ratio of intermediate layer (%) | | | 90 | 90 | 90 | 90 | 90 | 90 |
| Front layer | Homo PP (parts by weight) | | 100 | 85 | 50 | 50 | 0 | 0 |
| | Random PP (parts by weight) | | 0 | 15 | 50 | 50 | 100 | 100 |
| Intermediate layer | Homo PP (parts by weight) | | 100 | 85 | 50 | 50 | 0 | 0 |
| | Random PP (parts by weight) | | 0 | 15 | 50 | 50 | 100 | 100 |
| | Pigment MB | | 45 | 45 | 45 | 45 | 45 | 45 |
| Back layer | Homo PP (parts by weight) | | 100 | 85 | 50 | 50 | 0 | 0 |
| | Random PP (parts by weight) | | 0 | 15 | 50 | 50 | 100 | 100 |
| 10% modulus | | N/cm | 11.5 | 11.1 | 10.9 | 11.8 | 9 | 10.8 |
| Yield value | | N/cm | 11.6 | 11.3 | 11.2 | 11.6 | 10.2 | 12.3 |
| Film transportability | | | ○ | ○ | ○ | ○ | X | ○ |
| Color difference | | ΔE | 3.1 | 2.7 | 2.6 | 2.1 | 2.5 | 2.2 |
| Concealing properties | | | ○ | ○ | ○ | ○ | ○ | ○ |
| Heat shrinkage factor | MD | % | 0.1 | 0.2 | 0.2 | 0.0 | 0.8 | 0.6 |
| | TD | % | 0.5 | 0.6 | 0.6 | 1.0 | 0.7 | 0.5 |
| Printing ability | | | ○ | ○ | ○ | ○ | ○ | ○ |
| Film forming performance | | | ○ | ○ | ○ | ○ | ○ | ○ |
| Film cost | | | ○ | ○ | ○ | ○ | ○ | X |
| Comprehensive evaluation | | | ○ | ○ | ○ | ○ | X | X |

The films in examples 1 to 4 were excellent in film hardness (10% modulus, yield value), color difference (ΔE), and film forming performance, and accordingly were usable preferentially as films for decorative sheets that are excellent in film transportability, concealing properties, and film forming performance. The films also were usable preferentially as films for decorative sheets that are excellent in heat shrinkage property and printing characteristics.

The reference example was for illustrating results of evaluation of a film fabricated in the same manner as in comparative example 1 except that the thickness was set to 60 µm). If the thickness is 60 µm, the embodiment is not preferable in terms of cost even though film transportability can be ensured. Also, stated in reverse, even for a film that is sufficiently usable at a thickness of 60 µm or higher, it is not the case that the film can satisfy the required quality as a film for decorative sheet if the thickness is simply made thinner.

The embodiments of examples 1 to 4 according to the present invention can clear the required quality sought for a film for decorative sheet even when the film is reduced in thickness, and are high in commercial value by being advantageous in terms of cost.

## Claims

1. A polyolefin film for decorative sheet, having a thickness less than 60 µm; comprising at least a front layer, an intermediate layer, and a back layer, wherein a pigment content in the intermediate layer is greater than a pigment content in the front layer and back layer, or a pigment is contained only in the intermediate layer; a color difference between when the film is placed on a white portion and when the film is placed on a black portion of JIS K 5600 concealing power test paper is 4.0 or lower; and said film has a 10% modulus of 10.0 N/cm or higher after thermal treatment at 110°C for 60 minutes.

2. The polyolefin film for decorative sheet according to claim 1, wherein a yield value after thermal treatment at 110°C for 60 minutes is 10.0 N/cm or higher.

3. The polyolefin film for decorative sheet according to claim 1 or 2, wherein a heat shrinkage factor at 120°C is 2.5% or lower in the MD and TD.

4. The polyolefin film for decorative sheet according to any one of claims 1 to 3, wherein a ratio of thickness of the intermediate layer to the thickness of the entire film is 70% to 99.9%.

5. The polyolefin film for decorative sheet according to any one of claims 1 to 4, having a thickness of 50 µm or lower.

6. A decorative sheet made using the polyolefin film for decorative sheet according to any one of claims 1 to 5.
